# EUROPÄISCHE PATENTSCHRIFT

(11) **EP 0 928 963 B1**
(45) Veröffentlichungstag und Bekanntmachung des Hinweises auf die Patenterteilung: **25.06.2008**
(21) Anmeldenummer: 98121481.0
(22) Anmeldetag: 12.11.1998
(51) Int. Cl.: G01N 3/24, G01N 3/32, G01N 33/24

(54) **Dynamisch belastbares Kreisringschergerät**
Crown shear testing apparatus with dynamic load
Appareil de mesure en cisaillement à couronne avec charge dynamique

(30) Priorität: 12.11.1997 DE 29720058 U
(43) Veröffentlichungstag der Anmeldung: 14.07.1999
(73) Patentinhaber: Herold, Andreas, 99423 Weimar (DE)
(72) Erfinder: Herold, Andreas, 99423 Weimar (DE)
(74) Vertreter: Liedtke, Klaus

(56) Entgegenhaltungen:
- US-A- 3 635 078
- US-A- 5 036 709
- US-A- 5 275 056
- SCHULZE D: "ENTWICKLUNG UND ANWENDUNG EINES NEUARTIGEN RINGSCHERGERATES DEVELOPMENT AND APPLICATION OF A NOVEL RING SHEAR TESTER" AUFBEREITUNGS TECHNIK, VERLAG FUER AUFBEREITUNG SCHIRMER UND ZEH. WIESBADEN, DE, Bd. 35, Nr. 10, 1. Oktober 1994 (1994-10-01), Seiten 524-526,528-53, XP000471818 ISSN: 1443-9302

## Beschreibung

Die Erfindung betrifft ein Schergerät zur Bestimmung des Grenzflächenscherverhaltens zwischen Geokunststoffen und Lockergestein.

In der Bodenmechanik sind zur Untersuchung des Grenzflächenverhaltens zwischen Lockergestein und Geokunststoffen werden die maßgebenden Parameter mit Hilfe von Scherversuchen bestimmt.
Für diese Untersuchungen werden üblicherweise Kastenschergeräte mit Seitenabmaßen von 300 mm x 300 mm verwendet. Daneben sind für spezielle Aufgaben auch Kreisringapparaturen im Einsatz.
Zur Ermittlung des Reibungsverhaltens zwischen Geokunststoffen und Boden sind ferner Ausziehversuche üblich.

Aus der Schulze, Dietmar: "Entwicklung und Anwendung eines neuartigen Ringschergerätes Development and application of a novel ring shear tester", Aufbereitungstechnik, Verlag für Aufbereitung Schirmer und Zeh, Wiesbaden, DE, Bd. 35, Nr. 10, 1. Oktober 1994 ist ein transportables Ringschergerät zur Messung einer Fließeigenschaft von Schüttgütern bekannt. Eine Zeitverfestigungsmessung wird durch Entnahme eines Kreisrings realisiert, wobei der Kreisring als eine Scherzelle ausgeführt ist, welche von einem Scherkanal, insbesondere einem Probekörper, gebildet ist. Bei Messungen befindet sich eine Schüttgutprobe in dem Scherkanal und ist von einem ringförmigen Deckel belastet.

Bei den Kreisringapparaturen wird auf einer als kreisförmiger Bodenkörper ausgebildeten Probe eine Vertikallast und ein Torsionsmoment aufgebracht. Infolge des Torsionsmomentes wird in der Probe eine Schubspannung induziert. Dabei werden die seitlichen Verschiebungen in radialer Richtung behindert.

Bei den bekannten Einrichtungen ist nachteilig, dass diese nur zur Untersuchung statischer Vorgänge verwendet werden können. Ferner ermöglichen die bekannten Kreisringscherversuchsanordnungen nur geringe Schubspannungsdifferenzen in der Bruchebene zwischen Außen- und Innenradius der Kreisringprobe.

Der Erfindung liegt die Aufgabe zugrunde, ein Kreisringschergerät anzugeben, mit dem der Einfluß von dynamischen Lastkomponenten auf das Grenzflächenscherverhalten zwischen Geokunststoffen und Lockergestein untersucht werden kann und bei dem die radialen Reibungskräfte möglichst gering gehalten werden.

Die Aufgabe wird mittels eines Schergeräts gemäß Anspruch 1 gelöst und insbesondere dadurch, daß der Kreisring aus einer Grundplatte, einem äußeren Hüllring und einem inneren Hüllring, einem Probedeckel und einem Gehäusedeckel besteht, wobei an dem inneren Hüllring und dem äußeren Hüllring jeweils drehbar gelagerte Gleitringe angeordnet sind, dessen Höhen untereinander gleich sind und diese Höhe nur einen Teil der Höhe des jeweiligen Hüllringes beträgt.

Vorteilhafte Ausgestaltungen sind in den Unteransprüchen angegeben.

Der erfindungsgemäße Versuchsstand ermöglicht mit einem einfachen Versuchsaufbau und mit leicht reproduzierbaren Randbedingungen Untersuchungen mit folgenden Einsatzbedingungen:
- Variation der Vertikalspannungen in bauwerkstypischen Bereichen (δ_{v,stat} = 0 ... 300 kPa),
- dyanamische Lastkomponente der Vertikalspannungen in einer Größenordnung (δ_{v,dyn} = 0 ...300 kPa),
- Beprobung mit handelsüblichen Standardmineralgemischen,
- Beprobung von Geokunststoffen - Vlies, Gewebe,
- neben sinusförmigen dynamische Lasten können beliebige Last-Zeit-Verläufe gefahren werden können,
- Arbeitsfrequenzbereich f = 0 ... 100 Hz.

Die Erfindung wird im folgenden anhand eines Ausführungsbeispieles näher erläutert. In den zugehörigen Zeichnungen zeigen:
Figur 1 eine Schnittdarstellung der Gesamtanordnung,
Figur 2 einen Schnitt durch den Kreisringbereich,
Figur 3 ein Kreisringdetail mit Innen- und Außenring,
Figur 4 ein Diagramm für einen vertikalen Belastungsfall und
Figur 5 die Einrichtung für die Horizontalkrafteinleitung.

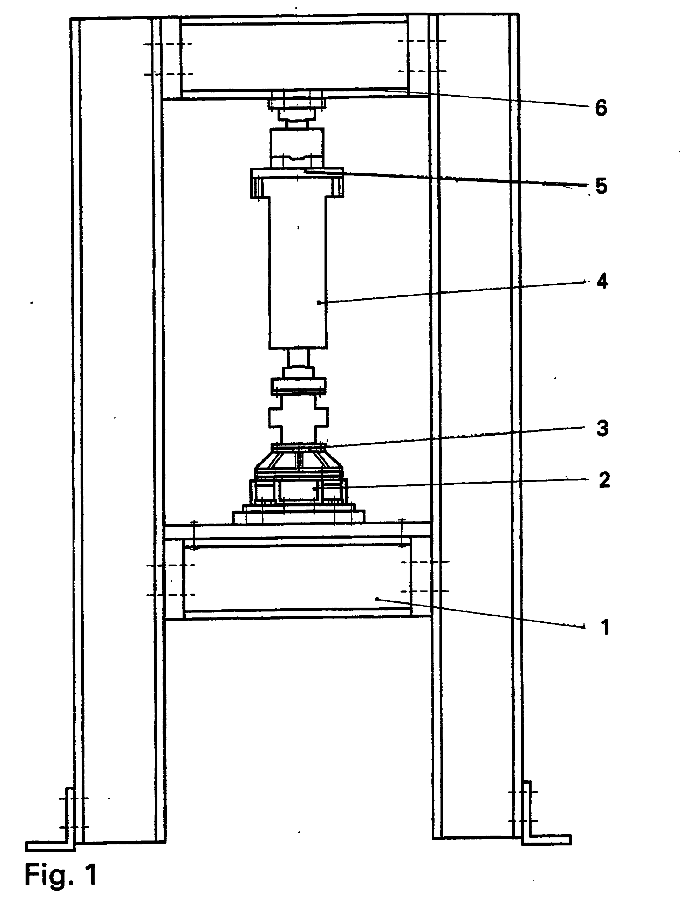

Wie aus Figur 1 ersichtlich ist, ist die Anordnung in einem rahmenförmigen Grundgestell angebracht. Daran ist eine Arbeitsplatte 1 befestigt, auf der sich der Kreisring 2 mit einer Aufnahme für das zu untersuchende Material befindet. Die Vertikalkraft wird von einem hydraulisch betätigten Zylinder 4 erzeugt, der mit einer hydrostatischen Lagerung versehen ist, um eine selbsttätige Zentrierung des Kolbens zu gewährleisten und um Reibungskräfte auszuschließen. Zur Gewährleistung einer vollflächigen Kraftübertragung zwischen Gehäusedeckel und Bodenprobe ist zwischen dem Probendeckel des Kreisringes 2 und dem Kolben des Zylinders 4 ein Kardangelenk 3 angeordnet. Die Vertikalkraft wird mit einer Kraftmeßdose 5 ermittelt, die sich zwischen dem Rahmen 6 und dem Zylinder 4 befindet.

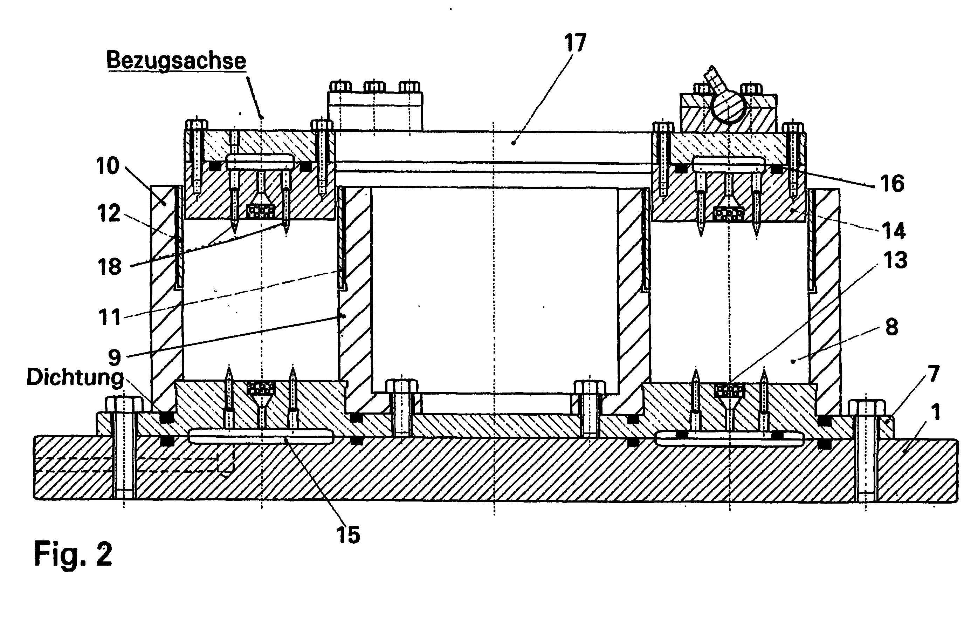

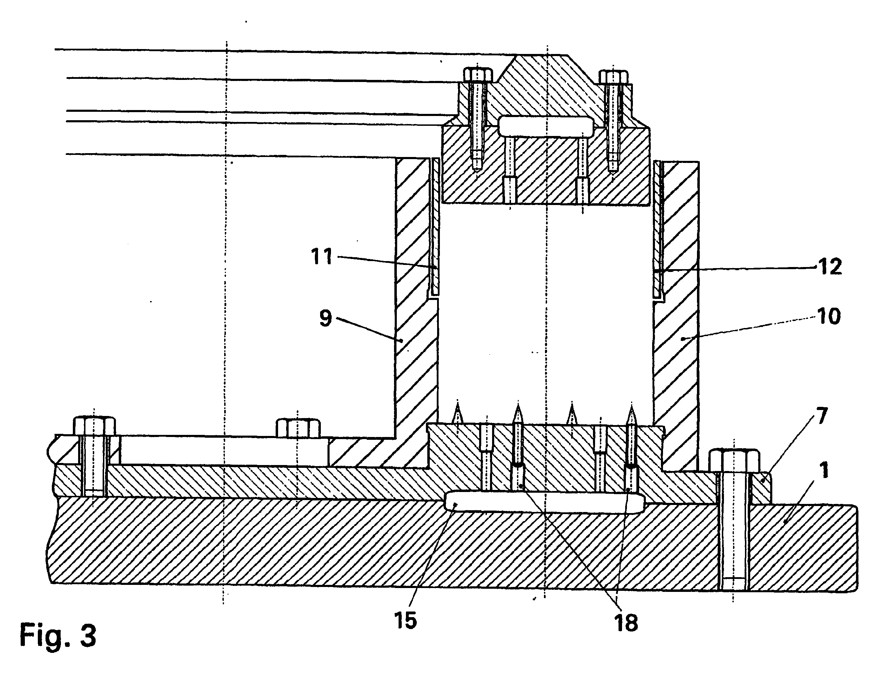

Der in den Figuren 2 und 3 erläuterte Kreisring 2 besteht aus einem inneren Hüllring 9 und einem äußeren Hüllring 10, die auf der Grundplatte 7 befestigt sind. In der oberen Hälfte der Hüllringe 9,10, sind der innere Gleitring 11 und der äußere Gleitring 12 eingesetzt. Diese Ringe sind paßgenau bearbeitet und werden mit Graphit bzw. Silikonöl geschmiert. An der Unterseite laufen sie konisch zu, um die Reibungsverluste während des Schervorganges so gering wie möglich zu halten. Eine Seitendehnung wird durch die genau eingepaßten Gleitringe 11,12 verhindert. Das Torsionsmoment und die Vertikallast werden am Kastendeckel eingeleitet. damit wird erreicht, daß sich beim Einleiten des Torsionsmomentes eine Zwangsgleitebene in der halben Probenhöhe, nämlich an der Eben, die durch die Übergangsstellen der Hüllringe 9, 10 zu den Gleitringen 11, 12 bestimmt wird.
Das Verhältnis der Kreisringradien hat einen maßgebenden Einfluß auf die Differenz der am äußeren und inneren Rand wirkenden Radialschubspannung. Der für den Versuchsstand vorgesehene Kreisringaußenradius beträgt Ra = 0,10 m, der Innenradius Ri = 0,05 m. Das Verhältnis ist so gewählt, daß der Einbau von Geokunststoffen ermöglicht wird.

Um Versuchsreihen nicht nur mit trockenen Proben, sondern auch mit teil- bzw. gesättigten Probematerial durchführen zu können, ist eine ausreichende Entwässerung nach oben und nach unten erforderlich. Hierzu sind in der Grundplatte 7 und in dem Probedeckel 14 Filtersteine 13 angebracht. Die Filtersteine 13 sind mit jeweils im Probedeckel 14 und in der Grundplatte 7 angeordneten Ringkanälen verbunden. Aus den Ringkanälen führt eine Entwässerungsöffnung 15 an die Gerätewandung. Der Probedeckel 14 und die Grundplatte 7 sind mit Gummirundringen 16 abgedichtet um das Eindringen der Feuchtigkeit zu verhindern. Auf dem Probendeckel 14 ist mit Gewindestiften 18 ein Gehäusedeckel 17 befestigt. In der Grundplatte 7 und dem Probedeckel 14 befinden sich verstellbare Gewindestifte 18, die zur Kraftübertragung dienen. Auf diese Weise wird die Schubkraftübertragung zwischen dem Gehäuse und der Bodenprobe wirkungsvoll unterstützt. Je nach Korngröße und Bodenart können diese Gewindestifte 18 verlängert, verkürzt oder durch andere Elemente z.B. Scherflügel ersetzt werden.

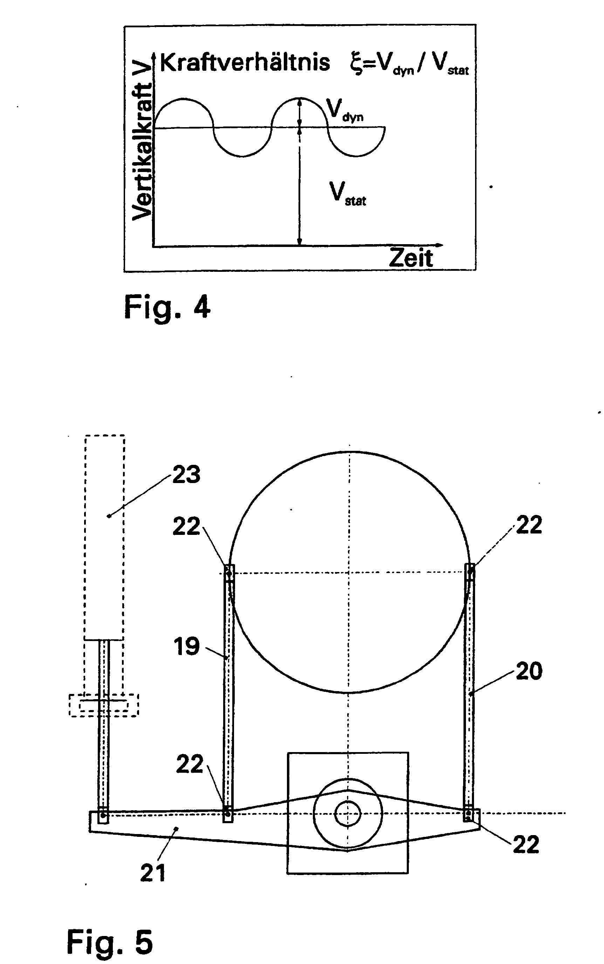

Figur 4 erläutert die Lastverhältnisse beim Aufbringen der Vertikallast. Die Vertikallast gliedert sich in eine statische und eine dynamische Komponente. Bezogen auf die Probekörperfläche läßt sich damit auch die Vertikalspannung in einen statischen und einen dynamischen Teil untergliedern. Es ist möglich neben sinusförmigen Überlagerungen beliebige Last-Zeit-Verläufe mit der statischen Grundbelastung zu kombinieren. Abbildung 1 zeigt das vertikale Belastungsmodell.
Die horizontale Krafteinleitung für das System wird in Figur 5 erläutert. Sie erfolgt über ein tangential an dem Gehäusedeckel 17 eingreifendes Hebelarmsystem. Um Querkräfte bei der Krafteinleitung auszuschließen, dienen zur Krafteinleitung eine Druckstange 19 und eine Zugstange 20. Die Druckumlenkung erfolgt im Auflagerungsbereich des Hebelarmes 21. Die Druckstange 19 und die Zugstange 20 sind an den Kopfenden jeweils mit Kardangelenken 22 an den Hebelarm 21 bzw. an den Gehäusedeckel 17 angeschlossen. Damit wird eine freie Bewegung während des Schervorganges ermöglicht. Die eingebauten Kardangelenke 22 erlauben Bewegungen in vertikaler und horizontaler Richtung. Damit werden die sich zwangsläufig infolge der Kreisbewegung ergebenden Lageänderung wirkungsvoll kompensiert. Zur Ausschaltung von Nebeneinflüssen auf die über das Hebelarmsystem 21 aufzubringende Vorschubkraft infolge Reibung ist der Hebelarm auf einem zweireihigen Wellenkugellager aufgesetzt. Zwischen dem in Figur 1 dargestellten Zylinder 4 und dem Gehäusedeckel 17 sind zwei zusätzliche Lager eingebaut worden, damit sich der Probedeckel 14 frei bewegen kann. Ebenfalls ein weiteres Kardangelenk schafft einen Ausgleich für Hebungen und Senkungen des Probenkörpers. Der für den Versuch erforderliche Vorschub wird über durch die Vorschubeinrichtung 23, die von einem drehzahlgesteuerten Motor betätigt wird, realisiert.
Die hier nicht dargestellte Meßwerterfassung erfolgt in der Weise, daß die Vorschubkraft, der Vorschubweg, die Beschleunigung vertikal, der Weg des Gehäuseweges, der Vertikalweg und die Vertikalkraft des Zylinders erfaßt und jederzeit abrufbar sind. Die Meßwertüberwachung, Berechnung und Auswertung erfolgt auch für die dynamischen Untersuchengen in Echtzeit. Die Steuerung der Vertikalkraft und des Vorschubes erfolgen unabhängig von der Meßwerterfassung.
Das erfindungsgemäße Schergerät ermöglicht es, auf die statische Vertikallast einen dynamischen Lastanteil aufzubringen. Damit können auch Bruchscherfestigkeiten bei verschiedenen Frequenzen untersucht werden.

### Bezugszeichenliste

- 1: Arbeitsplatte
- 2: Kreisring
- 3: Kardangelenk
- 4: Zylinder
- 5: Kraftmeßdose
- 6: Rahmen
- 7: Grundplatte
- 8: Probenkörper
- 9: innerer Hüllring
- 10: äußerer Hüllring
- 11: innerer Gleitring
- 12: äußerer Gleitring
- 13: Filterstein
- 14: Probedeckel
- 15: Entwässerungsöffnung
- 16: Gummirundring
- 17: Gehäusedeckel
- 18: Gewindestift
- 19: Druckstange
- 20: Zugstange
- 21: Hebelarm
- 22: Kardangelenk
- 23: Vorschubeinrichtung

## Patentansprüche

1. Schergerät zur Bestimmung des Grenzilächenscherverhaltens zwischen Geokunststoffen und Lockergestein, bei dem in einer als Kreisring (2) ausgebildeten Anordnung sich eine Probe von einem Bodenkörper befindet, auf dem eine Vertikallast und ein Torsionsmoment aufgebracht werden, **dadurch gekennzeichnet, daß** der Kreisring (2) aus einer Grundplatte (7), einem äußeren Hüllring (10) und einem inneren Hüllring (9), einem Probedeckel (14) und einem Gehäusedeckel (17) besteht, wobei an dem inneren Hüllring (9) und dem äußeren Hüllring (10) jeweils drehbar gelagerte Gleitringe (11, 12) angeordnet sind, dessen Höhen untereinander gleich sind und diese Höhe nur einen Teil der Höhe des jeweiligen Hülltinges (9,10) beträgt.

2. Schergerät nach Anspruch 1, **dadurch gekennzeichnet, daß** in der Grundplatte (7) und in dem Probedeckel (14) verstellbare Gewindestifte (18) oder Flügel angeordnet sind, die in den zu untersuchenden Probenkörper (8) hineinragen.

3. Schergerät nach Anspruch 1 oder 2, **dadurch gekennzeichnet, daß** der Gehäusedeckel (17) über eine Druckstange (19) und eine Zugstange (20), die diametral angeordnet sind, mit einem der Horizontalkraßeinleitung dienendem Hebelarmsystem (21) verbunden sind, wobei jeweils Kardangelenke (22) zwischen den Enden der Druckstange (19) und der Zugstange (20) sowie dem Gehäusedeckel (17) bzw. dem Hebelarmsystem (21) angeordnet sind.

## Claims

1. Shear device for determining the boundary layer shear behaviour between geosynthetics and soils, in which, in an arrangement formed as an annulus (2), a sample of a soil body is located and subjected to a vertical load and a torsional moment, **characterized in that** the annulus (2) consists of a base plate (7), an outer ring envelope (10), an inner ring envelope (9), a sample cover (14) and a casing cover (17), while rotatable slip rings (11, 12) are each arranged at the inner ring envolope (9) and at the outer ring envelope (10), whose heights are only a part of the height of the corresponding ring envelope (9, 10).

2. Shear device as claimed in claim 1, **characterized in that** adjustable threaded pins (18) or wings are located in the base plate (7) and in the sample cover (14), and project into the sample body (8) to be examined.

3. Shear device as claimed in claim 1 or 2, **characterized in that** the casing cover (17) is connected via a push rod (19) and a pull rod (20), which are arranged diametrically, to a lever arm system (21) used for horizontal force application, while cardan joints (22) are arranged each between the ends of the push rod (19) and the pull rod (20) and the casing cover (17) or, correspondingly, the lever arm system (21).

## Revendications

1. Engin de cisaillement pour la détermination du comportement au cisaillement de la surface de contact entre des matériaux géosynthétiques et du matériau meuble, où un échantillon d'un sol se trouve dans un dispositif réalisé comme un anneau circulaire (2), sur lequel sont appliqués une charge verticale et un couple de torsion, **caractérisé en ce que** l'anneau circulaire (2) est composé d'une plaque de base (7), d'une enveloppe annulaire extérieure (10) et d'une enveloppe annulaire intérieure (9), d'un couvercle d'échantillon (14) et d'un couvercle de boîtier (17), des bagues de glissement (11, 12) montées chacune de manière à pouvoir tourner étant disposées contre l'enveloppe annulaire intérieure (9) et l'enveloppe annulaire extérieure (10), les hauteurs des dites bagues de glissement étant égales entre elles, lesdites hauteurs ne représentant qu'une partie de la hauteur de chaque enveloppe annulaire (9,10).

2. Engin de cisaillement selon la revendication 1, **caractérisé en ce que** des goujons filetés (18) ou des ailettes réglables sont disposés dans la plaque de base (7) et dans le couvercle d'échantillon (14), lesquels pénètrent dans l'échantillon de sol (8) à examiner.

3. Engin de cisaillement selon la revendication 1 ou 2, **caractérisé en ce que** le couvercle de boîtier (17) est relié par une tige de pression (19) et une tige de traction (20) disposées diamétralement à un système à bras de levier (21) servant à l'application de force horizontale, des joints à cardan (22) étant respectivement disposés entre les extrémités de la tige de pression (19) et de la tige de traction (20) ainsi qu'entre le couvercle de boîtier (17) et le système à bras de levier (21).
